# EUROPEAN PATENT SPECIFICATION

(11) **EP 1 641 306 B1**
(45) Date of publication and mention of the grant of the patent: **13.01.2010**
(21) Application number: 05020342.1
(22) Date of filing: 19.09.2005
(51) Int. Cl.: H04W 8/18

(54) **Service control system and service control method**
System und Verfahren zur Dienststeuerung
Système et procédé de gestion de service

(30) Priority: 22.09.2004 JP 2004275708
(43) Date of publication of application: 29.03.2006
(73) Proprietor: NTT DoCoMo, Inc., Chiyoda-ku Tokyo, 100-6150 (JP)
(72) Inventor: Hamada, Hisashi, NTT DoCoMo, Inc., Chiyoda-ku, Tokyo 100-6150 (JP); Yamaguchi, Hiroki, NTT DoCoMo, Inc., Chiyoda-ku, Tokyo 100-6150 (JP); Endo, Satoshi, NTT DoCoMo, Inc., Chiyoda-ku, Tokyo 100-6150 (JP); Shimada, Keiko, NTT DoCoMo, Inc., Chiyoda-ku, Tokyo 100-6150 (JP)
(74) Representative: Viering, Jentschura & Partner

(56) References cited:
- EP-A- 1 443 792
- WO-A-01/65872
- US-A1- 2003 027 575

## Description

### BACKGROUND OF THE INVENTION

### Field of the Invention

The present invention relates to a service control system for controlling services in mobile data communications and a service control method.

### Related Background of the Invention

Conventionally in mobile communications, roaming service is provided, so that even when the user is located outside the support region of the network provider with whom the user has contracted, the user is connected to the contracted mobile communications network via the mobile communications network of a different network provider which supports the area where the user is located. Details of the above are contained in Japanese Patent Laid-Open Publication No. 2004-153392, for example.
Document EP 1443 792 discloses the restriction of content transmission to roaming mobile units among roaming communication systems of the same network type due to regional restrictions caused by copyright laws. No other prior art is known.
Document WO01658 discloses a Roaming Solution network system (100), including a Roaming Server (116), a National Location Register (112), and an 800 number Remote Switching Unit (130). The system is integrated with a standard SS7 type telecommunications network and further coupled to an account based billing and call control platform that allows registered wireless credit limited subscribers to place and receive calls when roaming outside of their Home Provider's network. It is verified that the wireless subscriber's account balance is sufficient to place or receive the call, the account balance is translated into talk minutes, and the call is monitored for talk duration. The Roaming Solution network system is further operable such that if the wireless subscriber exceeds the available account balance, the system tears down the call in the first negative minute and immediately decrements the wireless subscriber's account. If the call is disconnected prior to the account balance being depleted, the invention immediately decrements the wireless subscriber's account and releases the trunks. This Roaming Solution network system is designed to mitigate a Home Provider's exposure to credit risk when providing roaming services to credit limited subscribers.

Incidentally, for services in mobile data communications, such as Web-based information providing services and electronic mail services, the content of the service varies according to the system of mobile communication and the like. For example, with mobile communications services based on the third generation mobile telephone (IMT-2000 (International Mobile Telecommunication 2000)) system versus services based on the second generation mobile telephone (for example, PDC (Personal Digital Cellular)) system, there are differences in many aspects. For example, because of the difference in data transfer capacity, services based on third generation mobile telephone normally allow the transfer of large volumes of data. Users normally can receive service according to the mobile data communications system for which they have contracted with the network provider and to other such factors.

### SUMMARY OF THE INVENTION

Incidentally, there are cases where roaming service cannot be received due to such things as differences between the mobile communications systems of the network providers. For example, in the case that a user has contracted for PDC system service, he cannot receive with his PDC system terminal the roaming service from another network provider who is servicing a mobile communications network of the GSM (Global System for Mobile) system, the GPRS (General Packet Radio Service) system, or the IMT-2000 system type. To deal with this there are services that rent terminals of the IMT-2000 system or the like which are capable of roaming to users who, even when they are overseas, want to use temporarily the mobile telephone and mobile telephone-based data communications service having the same telephone number that they use domestically.

However, as explained above, the content of service based on the mobile data communications is different for mobile data communications networks of the IMT-2000 system or the like versus PCD system mobile data communications networks. For example, there are cases where, due to the difference in data size, the specifics of the content that can be used in services for IMT-2000 system and similar mobile data communications versus the content of services in PDC system mobile data communications will be different. Consequently, there is the problem that, when a user whose contract is for the PDC system has rented a mobile communications terminal of the IMT-2000 system or the like in order to receive roaming service, he will end up using a service that he is not normally accustomed to, and there is the danger that this will negatively impact customer convenience.

The present invention is intended to solve the above-mentioned problem, and an object is to provide a service control system and service control method such that, in providing services related to mobile data communications, degradation of customer convenience can be avoided even in cases such as where a mobile communications terminal of a different system is rented in order to receive roaming.

To achieve the above object, the service control system according to the present invention comprises a contract content database which is adapted to store the content of the mobile data communications contract including information on whether or not the mobile communications terminal, roaming in a different communication system, is a rented one; roaming determining means for determining whether or not the connection from the mobile communications terminal to mobile data communications network is by means of roaming; and service deciding means which are adapted, in the case that it is determined by the roaming determining means that the connection is by means of roaming, to refer to the contract content corresponding to the mobile communications terminal connected to the mobile data communications network, the content of which is stored in the contract content database, and to decide on service for mobile data communication with the mobile communications terminal.

With the service control system according to the present invention, the roaming determining means determines whether or not the connection from the mobile communications terminal to the mobile data communications network is by means of roaming. Next, the service deciding means, in the case that it is determined by the roaming determining means that the connection is by means of roaming, refers to the contract content corresponding to the mobile communications terminal connected to the mobile data communications network, the content of which is stored in the contract content database, and decides on the service for mobile data communication with the mobile communications terminal. In the above-mentioned manner, because the mobile data communications service is decided on by a service control system based on contract content, regardless of the system of the mobile communications terminal, in providing services related to mobile data communications degradation of customer convenience can be avoided even in cases such as where a mobile communications terminal of a different system is rented in order to receive roaming.

Also, it is preferable that the service control system further comprise service providing means for providing to the mobile communications terminal the service decided on by the service deciding means. Through this configuration, it is possible for the service control system even to perform service for the mobile communications terminal.

It is also preferable that the service decided on by the service deciding means be a service which transmits information in response to a service request transmitted from the mobile communications terminal and that the decision by the service deciding means be to decide on the data to be transmitted. Through this configuration, the service in mobile data communications can prevent degradation of customer convenience in cases such as the situation where data is transmitted from a mobile communications terminal in response to a service request.

It is also preferable that the roaming determining means make the determination by referring to header information attached by the mobile data communications network to the service request transmitted from the mobile communications terminal. Through this configuration, it becomes easy to implement the present invention in mobile data communication networks that attach the above-mentioned type of header to the service request from a mobile communications terminal connected by roaming.

Incidentally, the present invention can be described as a system, as explained above, but it can also be described as a service control method as below. This is simply a change of category; in substance it is the same invention and it provides the same kind of function and effect. The service control method of the present invention, in a service control system, having a contract content database which stores the content of the mobile data communications contract including information on whether or not the mobile communications terminal, roaming in a different communication system, is a rented one, includes a roaming determining step for determining whether or not the connection from the mobile communications terminal to the mobile data communications network is by means of roaming; and a service deciding step which, in the case that it is determined by that roaming determining step that the connection is by means of roaming, refers to the contract content corresponding to the mobile communications terminal connected to the mobile data communications network, the content of which is stored in the contract content database, and decides on the service for mobile data communication with the mobile communications terminal.

By means of the present invention, because the mobile data communications service is decided on based on the contract content, regardless of the mobile communications terminal system, degradation of customer convenience can be avoided even in cases such as where a mobile communications terminal of a different system is rented in order to receive roaming.

### BRIEF DESCRIPTION OF THE DRAWINGS

Fig. 1 is a diagram showing the configuration of a mobile data communications system including a service control system according to an embodiment of the present invention;

Fig. 2 is a diagram showing the content of the table stored in the contract content database in an embodiment;

Fig. 3 is a diagram showing the configuration of the service providing part in an embodiment; and

Fig. 4 is a flowchart showing the processing executed by the service control system in an embodiment.

### DESCRIPTION OF THE PREFERRED EMBODIMENTS

Below, embodiments of the service control system according to the present invention will be described while referring to the figures. Note that in explaining the figures, the same symbols will be used for the same elements and redundant descriptions will be omitted.

The service control system of the present embodiment is one which, in the case that the connection from a mobile communications terminal to a mobile data communications network has been made by means of roaming, provides data communications service to the mobile terminal for each type of contract content. Here, "data communications service," refers to Web-based information providing service, electronic mail service, or the like.

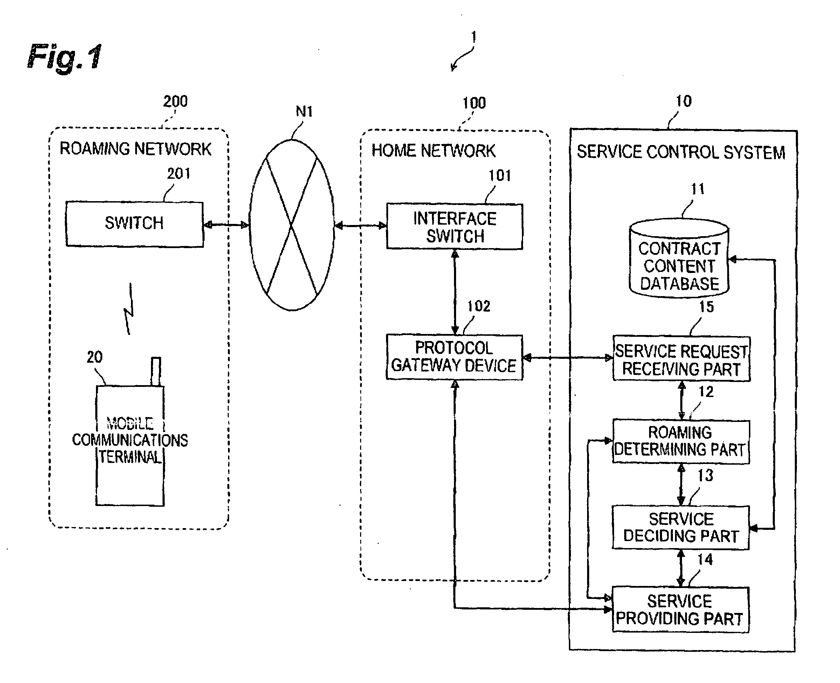

Fig. 1 shows the configuration of a mobile data communications system 1 including a service control system 10. The mobile data communications system 1 is configured to include the service control system and mobile data communications networks 100 and 200 and provides mobile data communication functions to a mobile communications terminal 20. The mobile data communications network 100 is a network provided by a network provider with whom the user of the mobile communications terminal 20 has contracted (below, the mobile data communications network 100 is called the home network 100). The mobile data communications network 200 is a network serviced by a different service provider and provides the mobile communications terminal 20 with roaming service which connects it to the home network 100 (below, the mobile data communications network 200 is called the roaming network.) This roaming service is provided via a network N1, such as a GRX (GPRS Roaming Exchange) network that controls roaming traffic as shown in Fig. 1.

With the home network 100, communication functions are provided by means of two data communication systems, for example IMT-2000 and PDC. The user makes a contract, selecting either the IMT-2000 or PDC, and can conduct mobile data communications using a mobile communications terminal of the contracted system. Further, with the IMT-2000, which is one of the above-mentioned two systems, the above-mentioned roaming service is supported, but with PDC, which is the other system, roaming is not supported.

The network provider of the home network 100 performs a service to users who have made PDC contracts whereby IMT-2000 system mobile communications terminals or UIM (User Identity Module) cards, which are subscriber verification modules used by those terminals, are rented to those users enabling them to conduct mobile data communications even in regions outside the home network 100 support region, such as overseas locations. For user convenience, the home network 100 sets the telephone number of the rented out mobile communications terminal to be the same as the telephone number of the mobile communications terminal of the PDC contract. Further, the above-mentioned rented out mobile communications terminal is not limited to being an IMT-2000 system mobile communications terminal, but may be a terminal that can receive roaming, such a GSM system or GPRS system mobile communications terminal. Likewise, the subscriber verification module may be an SIM (Subscriber Identity Module) and not a UIM card. The data communication system of the roaming network 200 may be any system which can perform roaming by means of a rented mobile communications terminal as mentioned above, such as the IMT-2000 system, the GSM system, or the GPRS system, for example.

In the present embodiment, the mobile communications terminal 20 is a terminal which has been rented out to a user who has contracted for a system from his home network 100 network provider that cannot receive roaming services of the PDC system and the like and is a terminal which can receive roaming service.

Continuing, the configuration of the home network 100, roaming network 200 and service control system 10 will each be described. As shown in Fig. 1, the home network 100 is configured including an interface switch 101 and a protocol gateway device 102.

The interface switch 101 is a switch that fulfills the home network 100 interface role during roaming, and is connected to the network N1 as shown in Fig. 1. The interface switch 101 receives the roaming connection request transmitted from the mobile communications terminal 20 via the switch of the roaming network, and transmits that connection request to the protocol gateway device 102 as a connection notification. Information such as country information about the countries that the roaming network 200 supports and the network provider information of the roaming network 200 is attached to this connection request by the roaming network 200. The mobile data communications connection between the mobile communications terminal 20 and the home network 100 is established upon completion of the sequence of processing whereby the connection request is transmitted to the protocol gateway device 102.

Also, after the connection is established, when there is a service request from the mobile communications terminal 20, such as an HTTP (HyperText Transfer Protocol) request or the like, the interface switch 101 transmits that service request to the protocol gateway device 102. The service requested by the above-mentioned service request is provided by the service control system 10. Further, information transmission to the protocol gateway device 102 is done via a device called a gateway switch and a router (neither shown in the figures).

The protocol gateway device 102 receives the connection notification of the mobile communications terminal 20 transmitted from the interface switch 101. In order to provide notification that a connection has been established, a transmission receipt notification is transmitted from the protocol gateway device 102 to the service control system 10 as well. Also, the protocol gateway device 102, upon establishment of the connection, stores information related to the connection such as the country information of the roaming network 200 and network provider information. Further, the protocol gateway device 102 receives from the interface switch 101 the service request from the mobile communications terminal 20 and transmits it to the service control system 10. When transmitting, [the protocol gateway device 102], referring to the roaming connection information it has stored, attaches to the service request, as header information, roaming information to the effect that this is a roaming connection, country information, and network provider information, and then transmits this to the service control system 10.

Further, the protocol gateway device 102 also transmits to the service control system 10 service requests from mobile communications terminals directly connected from the home network 100 and not by roaming connections. In such cases, attachment of header information with information related to roaming is not done. Also, in order that various services, for example those on the Internet, can be utilized at the mobile communications terminal 20, the protocol gateway device 102 performs switching between Internet protocol and mobile data communications protocols (such as the IMT-2000 system).

As shown in Fig. 1, the roaming network 200 is configured including the switch 201. The switch 201 is a switch that, during roaming, performs the role of the roaming network 200 side interface and is connected to the network N1 as shown in Fig. 1. The switch 201 receives from the mobile communications terminal 20 requests for connection to the home network 100 and service requests, which are transmitted via the roaming network 200 base station or the like, and transmits those to the home network 100 via the network N1.

Further, as mentioned above, the home network 100 and roaming network 200 support mobile data communications, but it is preferable that they also support mobile communications such as voice communication.

As shown in Fig. 1, the service control system 10 is configured including a contract content database 11, a roaming determining part 12, a service deciding part 13, a service providing part 14, and a service request receiving part 15. The service control system 10 is connected to configuration elements such as the server of the mobile data communications network 100. Consequently, it is preferable that the service control system 10 also be managed by the network provider who services the mobile data communications network 100.

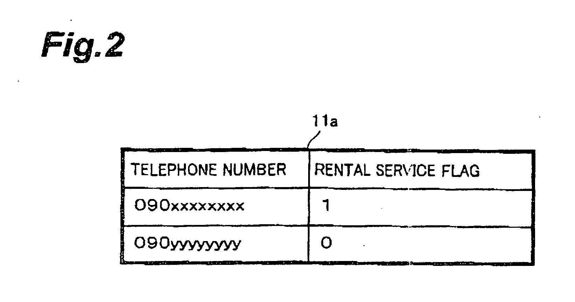

The contract content database 11 stores the content of the mobile data communications contract for the mobile communications terminal. Specifically, it maintains a table 11a shown in Fig. 2, and by recording information on the contract content in the table 11a, the contract content is stored. The stored contact content, as shown in the table 11a, includes the telephone number which identifies the mobile communications terminal 20 and the number is stored with a correspondence to information on whether or not the mobile communications terminal 20 is a rented one. For example, as shown in Fig. 2, if the terminal 20 whose telephone number is "090xxxxxxxx" is a rented one, a "1" will be stored for "rental service flag" in the part corresponding to that terminal 20 included in the data of the table 11 a. If it is not a rented one, a "0" will be stored for ''rental service flag." It is preferable that this information be acquired from, for example, the information on contracting parties that the home network 100 manages.

Here, in the case that the mobile communications terminal 20 is a rented one, the contract in regard to mobile data communication for that mobile communications terminal 20 is a contract for the PDC system which cannot receive roaming service. In other words, users who have those contracts normally are provided service for mobile data communication by the PDC system and are not provided service for mobile data communication by the IMT-2000 system.

When a service request from the mobile communications terminal 20 is transmitted from the home network 100, the roaming determining part 12 determines whether or not the connection from the mobile communications terminal 20 to the home network 100 is by means of roaming. Specifically, this is done according to whether, after receiving the service request, it is determined that roaming information, country information, network provider information and the like have been attached to that service request by the protocol gateway device 102 of the home network 100. If roaming information has been attached to the service request, it is determined that the connection is made by means of roaming. In the case that the roaming determining part 12 determines that the connection is made by means of roaming, the service request is transmitted to the service deciding part 13.

The service deciding part 13 receives the service request transmitted from the roaming determining part 12, and decides on the content of the service to be provided by the service providing part 14. This decision is made by referring to the contract content stored in the contract content database 11 corresponding to the mobile communications terminal 20 and details will be explained below. The service deciding part 13 transmits to the service providing part 14 information about the service decided on.

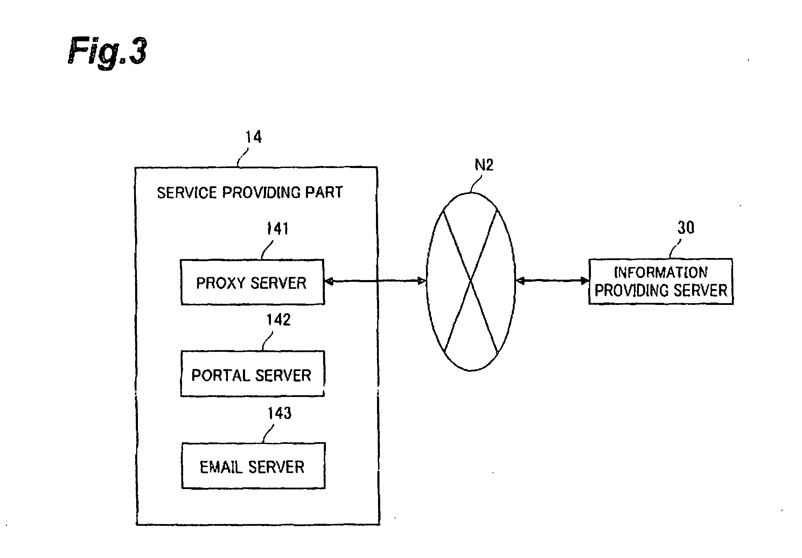

The service providing part 14 provides the service decided on by the service deciding part 13, based on the service request from the mobile communications terminal 20. Specifically, proxy services for connecting the mobile communications terminal 20 to the Internet and the like, information providing services based on the Web which provide various information, and electronic mail services and the like are appropriate examples. Data related to service provision are transmitted to the protocol gateway device 102 of the home network 100 and are transmitted to the mobile communications terminal 20 via the network N1 and the roaming network 200 and the like. As shown in Fig. 3, to provide these services the service providing part 14 is configured, for example, to include a proxy server 141, a portal server 142, and an email server 143.

The proxy server 141 is a server that provides to the mobile communications terminal 20 the function of connecting to the Internet. As shown in Fig. 3, the proxy server 141 is connected to the Internet N2 and to the Internet N2, an information providing server 30 is connected. For an information providing server 30, for example a Web server or the like which provides various information is appropriate. The service request transmitted to the proxy server 141 from the mobile communications terminal is, for example an HTTP request, and the proxy server 141 transmits that HTTP request to the information providing server 30 via the Internet N2. In response to an HTTP request, the proxy server 141 transmits the data transmitted from the information providing server 30 to the mobile communications terminal. Also, the proxy server 141 provides functions such as SSL (Secure Socket Layer) as well.

The portal server 142 is a server for Web service provided by the service control system 10. It provides various information and a Web link function to the mobile communications terminal. Service requests transmitted from the mobile communications terminal to the portal server 142 are, for example, HTTP requests in the same way as the proxy server 141.

The email server 143 is a server that provides electronic mail service. Service requests transmitted from the mobile communications terminal to the email server 143 are, for example, for transmission of email or receipt of email. It is preferable that the email server 143 support both email via the Internet and email that can be transmitted and received only between terminals that are both contracted with the home network 100.

Services that are provided by the service providing part 14, as described above, differ according to the system of mobile data communication. For example, the service will be different with the IMT-2000 system verses with the PDC system. That difference is such that, for example, even in the case that an information content request is transmitted to the proxy server 141 and the portal server 142 in the same way, in the case that the request is transmitted from an IMT-2000 system terminal, information content having a larger amount of data can be transmitted and received. With the service providing part 14 and the information providing server 30, content data is prepared ahead of time for each mobile data communications system and different content data is transmitted for each system.

As another example of a difference, there is, for example, a data size limit in the email server 143. The limit of email data size with the 1MT-2000 system is 10K bytes, but with the PDC system it is 500 bytes. These differences are caused by differences in data transfer capacity and the like.

The service request receiving part 15 receives service requests from the mobile communications terminal 20. The service request receiving part 15 transmits the service requests thus received to the roaming determining part 12.

Further, transmission and receipt of information between the home network 100 and the service control system 10 is done via the gateway device (not shown in the figures) included in the service control system 10. Also, this gateway device may be made to perform functions up to the dispatching of service requests to the various servers 141 through 143 of the service providing part 14. In that case, it is preferable simply to include the functions of the roaming determining part 12, the service deciding part 13 and the service request receiving part 15 in the gateway device. Alternatively, it is also acceptable to provide the functions of the roaming determining part 12, the service deciding part 13 and the service request receiving part 15 in each of the servers 141 through 143 of the service providing part 14.

Each of the above-mentioned elements which comprise the above-mentioned home network 100, the roaming network 200 and the service control system 10 can be implemented by means of server units and the like which are configured including a CPU, memory, and the like. Further, in Fig. 1, the service control system 10 is provided outside of the home network 100, but it may also be one of the constituent elements of the home network 100.

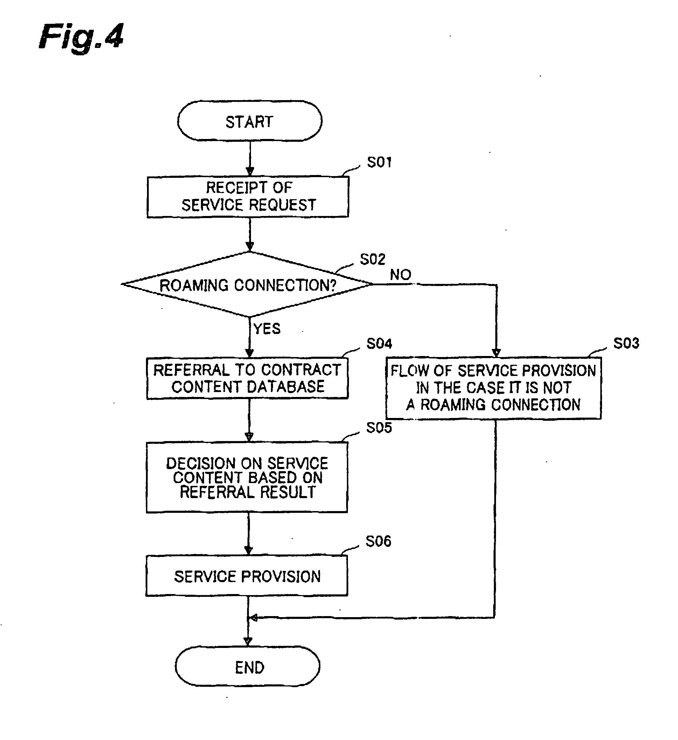

Next, using the flow chart of Fig. 4, the processing that is executed by means of the service control system 10 in the present embodiment is explained below. This processing is executed when a service request for mobile data communication is transmitted from the mobile communications terminal 20 to the service control system 10. Note that it is assumed that the connection from the mobile communications terminal 20 to the home network 100 has been established beforehand.

Upon transmission of a service request from the mobile communications terminal 20, that request arrives at the service control system 10 via the switch of the roaming network 200, the network N1, the interface switch 101 of the home network and the protocol gateway device 102. In the protocol gateway device 102, roaming information, country information and network provider information is attached to the service request as header information. Also, information that identifies the mobile communications terminal 20, such as a telephone number, can be obtained from the service request.

At the service control system 10, the service request receiving part 15 receives that service request (S01).
The service request receiving part 15 transmits the service request thus received to the roaming determining part 12. The roaming determining part 12 determines whether or not that service request was transmitted from a mobile communications terminal 20 which is connected by roaming to the home network 100 (S02). This determination is made by referring to the header information of the service request. In the case that roaming information and the like has been added to the header information, it is determined that the connection is one made by roaming. In the case that it is determined that the connection is not one made by roaming, the service request is transmitted to the service providing part 14 and provision of service to the mobile communications terminal is done by means of the service providing part 14 (S03). Because the processing of S03 becomes a flow of service provision to a mobile communications terminal connected directly to the home network 100, it is the same kind of processing as the flow of service provision under conventional techniques, so an explanation is omitted here.

In the case that it is determined that the connection is by means of roaming, the service request is transmitted to the service deciding part 13. The service providing part 13 identifies the telephone number of the mobile communications terminal 20 from that service request. Next, service deciding part 13, referring to the contract content database 11, based on the telephone number thus identified, obtains information as to whether or not the mobile communications terminal 20 is a rented one or not (S04).

From the content thus obtained, the service deciding part 13 determines the service to be provided by the service providing part 14 (S05). In the case that the mobile communications terminal 20 is a rented one, the contract of the user of that mobile communications terminal 20 is a contract using the PDC system, so service using the PDC system is decided on for the service to the mobile communications terminal 20. Alternatively, a service used for the rented mobile communications terminal 20, different from service that uses the PCD system, may be prepared in the service providing part 14 and that service may be decided on. The service which is used for the rented mobile communications terminal 20 may, for example, be one that provides content data which includes information for foreign users outside the support region of the home network 100, and the like.

In the case that the mobile communications terminal 20 is not a rented one, the contract of the user of that mobile communications terminal 20 is a contract based on the IMT-2000 system, so service using the IMT-2000 system is decided on for the service to the mobile communications terminal 20. The service deciding part 13 communicates to the servers 141 through 14 3 of the service providing part 14 that responded to the service request the content of the service decided on. For example, in the case that the service request was one relating to email service, this is communicated to the email server 143.

Next, the service providing part 14 (servers 141 through 143 thereof) provides to the mobile communications terminal 20 the service decided on by the service deciding part 13 (S06). Specifically, for example, the service providing part 14 transmits data to the mobile communications terminal 20 which data is in response to the service request and was decided on by the service deciding part 13.

As described above, according to the service control system 10 of the present embodiment, the mobile data communications service is decided on based on contract content, regardless of the system of the mobile communications terminal 20 which is actually doing the roaming, so degradation of customer convenience can be avoided even in cases such as where a mobile communications terminal of a different system is rented in order to receive roaming service.

Note that this is a method whereby determination of whether or not the mobile communications terminal 20 is a rented one is made at the home network 100. However, for this determination, software processing is required and, because this kind of software processing is not normally done by home networks, large-scale modification of the system of the home network 100 becomes necessary. On the other band, with a service control system 10 of the kind in the present embodiment, an easier implementation becomes possible because all that is required is to perform a modification that adds the kind of processing of the present embodiment to a system that from the beginning has been providing service.

Also, if the configuration is made one that includes the service providing part 14 in the service control system 10, as in the present embodiment, it is possible for the service control system 10 to service the mobile communications terminal 20. However, the service providing part 14 is not an essential requirement in the service control system 10 and it need not be included in the service system 10.

Further, in the present embodiment the aspect whereby data is transmitted in response to a service request was chosen, but the embodiment is not limited to this aspect, and, for example, a service whereby content data is transmitted to the mobile communications terminal 20 even without a service request would also be acceptable.

Also, if, as in the present embodiment, the determination of whether or not the connection is made by roaming is made by referring to header information attached to the service request transmitted from the mobile communications terminal 20 by the mobile data communications network 100 (the protocol gateway device 102 thereof), implementation becomes easy in respect to mobile data communication networks which add header information of the kind mentioned above in regard to connections made by roaming. However, it is also acceptable to determine by a method other than this one whether or not a connection is a roaming connection.

## Claims

1. A service control system (10) comprising:
roaming determining means (12) for determining whether or not the connection from the mobile communications terminal (20) to a mobile data communications network (100) is by means of roaming; and
service deciding means (13) adapted to provide a service based on a determination by the roaming determining means (12),
**characterized by**
a contract content database (11) which is adapted to store the content of a mobile data communications contract including information (11a) on whether or not the mobile communications terminal (20), roaming in a different communication system (200), is a rented one; and
the service deciding means (13) which are adapted, in the case that it is determined by the roaming determining means (12) that the connection is by means of roaming, to refer to the contract content corresponding to the mobile communications terminal (20) connected to the mobile data communications network (100), the content of which is stored in the contract content database (11), and to decide on service for mobile data communication with the mobile communications terminal (20).

2. The service control system (10) according to Claim 1, further comprising service providing means (14) for providing to the mobile communications terminal the service decided on by the service deciding means (13).

3. The service control system (10) according to Claim 1 or Claim 2, comprising means (14) to transmit information as a service in response to a service request transmitted from the mobile communications terminal (20), the service deciding means (13) being adapted to decide on the service, whereby the service deciding means (13) are adapted to decide on the transmitted data.

4. The service control system (10) according to Claim 3, wherein the roaming determining means (12) are adapted to make the determination by referring to header information attached by the mobile data communications network (100, 200) to the service request transmitted from the mobile communications terminal (20).

5. A service control method in a service control system, comprising the steps of:
determining whether or not the connection from the mobile communications terminal to the mobile data communications network is by means of roaming (S02);
**characterized by**
the service control method in being performed in a service control system having a contract content database (11), which stores the content of a mobile data communications contract including information (11a) on whether or not the mobile communications terminal (20), roaming in a different communication system (200), is a rented one; and
referring, in the case that it is determined by the roaming determining step that the connection is by means of roaming, to the contract content corresponding to the mobile communications terminal connected to the mobile data communications network (S04), the content of which is stored in the contract content database, and deciding on the service for mobile data communication (S05) with the mobile communications terminal.

## Patentansprüche

1. Dienst-Kontroll-System (10) aufweisend:
• Roaming-Ermittlungs-Mittel (12) zum Ermitteln, ob oder ob nicht die Verbindung von dem Mobil-Kommunikations-Endgerät (20) zu einem Mobil-Daten-Kommunikations-Netzwerk (100) mittels Roaming ist; und
• Dienst-Entscheide-Mittel (13), eingerichtet zum Bereitstellen eines Dienstes basierend auf einer Ermittlung der Roaming-Ermittlungs-Mittel (12),
**gekennzeichnet durch**
• eine Vertrag-Inhalt-Datenbank (11), welche eingerichtet ist zum Speichern des Inhalts eines Mobil-Daten-Kommunikations-Vertrags enthaltend Information (11a) darüber, ob oder ob nicht das Mobil-Kommunikations-Endgerät (20), das in einem anderen Kommunikations-System (200) roamt, ein gemietetes ist; und
• die Dienst-Entscheide-Mittel (13), welche eingerichtet sind zum, in dem Fall, dass von den Roaming-Ermittlungs-Mitteln (12) ermittelt wird, dass die Verbindung mittels Roaming ist, Bezug nehmen auf den Vertrags-Inhalt korrespondierend zu dem Mobil-Kommunikations-Endgerät (20) verbunden mit dem Mobil-Daten-Kommunikations-Netzwerk (100), dessen Inhalt in der Vertrag-Inhalt-Datenbank (11) gespeichert ist, und zum Entscheiden über einen Dienst für Mobil-Daten-Kommunikation mit dem Mobil-Kommunikations-Endgerät (20).

2. Dienst-Kontroll-System (10) gemäß Anspruch 1, ferner aufweisend Dienst-Bereitstellungs-Mittel (14) zum dem Mobil-Kommunikations-Endgerät den Dienst, über den von den Dienst-Entscheide-Mitteln (13) entschieden wurde, Bereitstellen.

3. Dienst-Kontroll-System (10) gemäß Anspruch 1 oder Anspruch 2,
aufweisend Mittel (14) zum Übertragen von Information als einen Dienst in Antwort auf eine Dienst-Anforderung übertragen von dem Mobil-Kommunikations-Endgerät (20), wobei die Dienst-Entscheide-Mittel (13) eingerichtet sind zum Entscheiden über den Dienst, wobei die Dienst-Entscheide-Mittel (13) eingerichtet sind zum Entscheiden über die übertragenen Daten.

4. Dienst-Kontroll-System (10) gemäß Anspruch 3,
wobei die Roaming-Ermittlungs-Mittel (12) eingerichtet sind zum Durchführen der Ermittlung durch Bezugnehmen auf Kopf-Information angefügt von dem Mobil-Daten-Kommunikationsnetzwerk (100, 200) zu der Dienst-Anforderung übertragen von dem Mobil-Kommunikations-Endgerät (200).

5. Dienst-Kontroll-Verfahren in einem Dienst-Kontroll-System, aufweisend die Schritte des:
• Ermittelns, ob oder ob nicht die Verbindung von dem Mobil-Kommunikations-Endgerät zu dem Mobil-Daten-Kommunikations-Netzwerk mittels Roaming ist (S202);
**gekennzeichnet durch**
• das Dienst-Kontroll-Verfahren, indem es in einem Dienst-Kontroll-System durchgeführt wird, das eine Vertrag-Inhalt-Datenbank (11) hat, welche den Inhalt eines Mobil-Daten-Kommunikations-Vertrags enthaltend Information (11a) darüber, ob oder ob nicht das Mobil-Kommunikations-Endgerät (20), das in einem anderen Kommunikations-System (200) roamt, ein gemietetes ist, speichert; und
• Bezugnehmen, in dem Fall, dass von den Roaming-Ermittlungs-Schritt ermittelt wird, dass die Verbindung mittels Roaming ist, auf den Vertrags-Inhalt korrespondierend zu dem Mobil-Kommunikations-Endgerät (20) verbunden mit dem Mobil-Daten-Kommunikations-Netzwerk (S04), dessen Inhalt in der Vertrag-Inhalt-Datenbank gespeichert ist, und zum Entscheiden über den Dienst für Mobil-Daten-Kommunikation (S05) mit dem Mobil-Kommunikations-Endgerät.

## Revendications

1. Système de commande de services (10) comprenant :
des moyens de détermination de déplacement (12) destinés à déterminer si la connexion en provenance du terminal de communications mobiles (20) et à destination d'un réseau de communications de données mobiles (100), se fait ou pas au moyen d'un déplacement ; et
des moyens de décision de services (13) aptes à fournir un service sur la base d'une détermination faite par les moyens de détermination de déplacement (12),
**caractérisé par** :
une base de données de contenu de contrat (11) qui est apte à stocker le contenu d'un contrat de communications de données mobiles qui comprend des informations (11a) sur le fait que le terminal de communications mobiles (20), qui se déplace dans un système de communication différent (200), est loué ou pas ; et
les moyens de décision de services (13) qui sont aptes à se référer, dans le cas où les moyens de détermination de déplacement (12) ont déterminé que la connexion se fait au moyen d'un déplacement, au contenu de contrat qui correspond au terminal de communications mobiles (20) connecté au réseau de communications de données mobiles (100), dont le contenu est stocké dans la base de données de contenu de contrat (11), et à décider du service de communication de données mobile avec le terminal de communications mobiles (20).

2. Système de commande de services (10) selon la revendication 1, comprenant en outre des moyens de fourniture de services (14) destinés à fournir au terminal de communications mobiles le service décidé par les moyens de décision de services (13).

3. Système de commande de services (10) selon la revendication 1 ou la revendication 2, comprenant des moyens (14) destinés à transmettre des informations comme un service en réponse à une demande de service transmise par le terminal de communications mobiles (20), les moyens de décision de services (13) étant aptes à décider du service, grâce à quoi les moyens de décision de services (13) sont aptes à décider des données transmises.

4. Système de commande de services (10) selon la revendication 3, dans lequel les moyens de détermination de déplacement (12) sont aptes à procéder à la détermination en se référant aux informations d'en-tête attachées par le réseau de communications de données mobile (100, 200), à la demande de service transmise par le terminal de communications mobiles (20).

5. Procédé de commande de services dans un système de commande de services, comprenant les étapes consistant à :
déterminer si la connexion en provenance du terminal de communications mobiles et à destination d'un réseau de communication de données mobiles, se fait ou pas au moyen d'un déplacement (S02) ;
**caractérisé par** :
le procédé de commande de services est exécuté dans un système de commande de services qui présente une base de données de contenu de contrat (11) qui stocke le contenu d'un contrat de communications de données mobiles qui comprend des informations (11a) sur le fait que le terminal de communications mobiles (20), qui se déplace dans un système de communication différent (200), est loué ou pas ; et
se référer, dans le cas où l'étape de détermination de déplacement a déterminé que la connexion se fait au moyen d'un déplacement, au contenu de contrat qui correspond au terminal de communications mobiles connecté au réseau de communications de données mobiles (S04), dont le contenu est stocké dans la base de données de contenu de contrat, et à décider du service de communication de données mobile (S05) avec le terminal de communications mobiles.
